# EUROPÄISCHE PATENTANMELDUNG

(11) **EP 0 833 536 A2**
(43) Veröffentlichungstag der Anmeldung: **01.04.1998**
(21) Anmeldenummer: 97116267.2
(22) Anmeldetag: 18.09.1997
(51) Int. Cl.: H04Q 7/26

(54) **Kommunikationssystem mit Schnurlosfunktion**

(30) Priorität: 30.09.1996 DE 19640294
(71) Anmelder: SIEMENS AKTIENGESELLSCHAFT, 80333 München (DE)
(72) Erfinder: Jahn, Alfred, 81373 München (DE); Rippstein, Eugen, 8904 Aosch (CH); Weisigk, Günter, 8052 Birmensdorf-Zürich (CH); Lietha, Peter, 5525 Fischbach-Gösliken (CH)

(57) **Zusammenfassung**

Es wird ein Kommunikationssystem mit einer Vermittlungssteuerung und einer Vielzahl von Teilnehmeranschlußmodulen beschrieben, bei der über Teilnehmeranschlußmodule ein Verbindungssteuerungssystem, bestehend aus mindestens zwei Verbindungssteuereinheiten mit nachgeordndeten Basisstationen zur Schnurlosverbindung zu Schnurlosendgeräten vorgesehen ist. Erfindungsgemäß realisiert eine Mobilitätsmanagementeinrichtung die den Verbindungssteuereinheiten übergeordneten Mobilitätsfunktionen, dient der Anpassung der Signalisierung zwischen der Vermittlungssteuerung und den Verbindungssteuereinheiten und dient der Wegelenkung der Nutzinformationen zwischen der Vermittlungssteuerung und jeweils der Verbindungssteuereinheit, der die zum Verbindungsaufbau mit einem Ruf beteiligten Handapparat als geeignet ausgewählte Basisstation zugeordnet ist. Die Mobilitätsmanagementeinrichtung kann hierbei aus mehreren Mobilitätsmanagement-Subeinrichtungen bestehen, zwischen denen mindestens eine Signalisierungsinformationsübertragung unter Umgehung der Vermittlungssteuerung vorgesehen ist und gegebenenfalls auch eine Nutzsignalinformationsübertragung.

## Beschreibung

Die Erfindung betrifft ein Kommunikationssystem mit Schnurlosfunktion, bestehend aus einer Vermittlungssteuerung mit einer Vielzahl von Teilnehmeranschlußmodulen, an die jeweils mindestens ein Kommunikationsendgerät anschließbar ist und die durch Signalisierungs- und Nutzkanalverbindungen untereinander zu Anschlußmodulgruppen zusammenfaßbar sind, zum Auf- und Abbauen aller Rufe zwischen Kommunikationsendgeräten, sofern mindestens eines der rufbeteiligten Kommunikaticnsendgeräte an die Vermittlungssteuerung angeschlossen ist und zum Steuern der jeweils erforderlichen Verbindungen; außerdem bestehend aus einer Vielzahl von Basisstationen, die drahtgebunden über Teilnehmeranschlußmodule mit der Vermittlungssteuerung verbindbar sind und über eine Luftschnittstelle Schnurlosendgeräten verbindbar sind; darüber hinaus bestehend aus tragbaren Handapparaten als Kommunikationsgeräte mit jeweils zugeordneter Identifikation zum drahtlosen Informationsaustausch mit jeweils einer Basisstation, die vom Handapparat aus einer Vielzahl von Basisstationen als für einen Verbindungsaufbau geeignet ausgewählt ist und bestehend aus einem Verbindungssteuerungssystem, das über ein Teilnehmeranschlußmodul an die Vermittlungssteuerung angeschlossen ist, dem die genannten Basisstationen zur Informationsübertragung zwischen dem Verbindungssteuerungssystem und den Handapparaten zugeordnet sind, dem eine Vielzahl von Handapparaten abhängig von deren Identifikation zugeordnet ist und die die Identifikation der Handapparate jeweils in Rufnummern für die Vermittlungssteuerung umsetzt bzw. Rufnummern in Identifikationen der Handapparate umsetzt und die Wegelenkung der Nutzinformation zwischen dem Verbindungssteuerungssystem und den Handapparaten durchführt.

Ein Problem solcher Kommunikationssysteme liegt darin, daß über Teilnehmeranschlußmodule nur eine bestimmte Anzahl von Verbindungen geschaltet werden können. Bei Realisierung größerer Kommunikationssysteme, die aufgrund der großen räumlichen Ausdehnung des Systems eine große Anzahl von Basisstationen benötigen, oder die aufgrund der großen Anzahl zu bedienender Schnurlosendgeräte eine große Anzahl von Schnurlosverbindungen bereitstellen müssen, ist bei solchen Systemen die Mobilitätsfunktion Handover, also das Übergeben einer Verbindung von einer Basisstation zu einer anderen Basisstation bei Wechsel des Funkbereichs nur möglich, sofern die Basisstationen am selben Verbindungssteuersystem, d.h. an demselben Teilnehmeranschlußmodul angeschlossen sind.

Aufgabe der Erfindung ist es, ein genanntes Kommunikationssystem derart weiterzubilden, daß auch Systeme mit einer großen Zahl von Basisstationen oder mit sehr vielen Schnurlosteilnehmern im gesamten Bereich des Systems die Mobilitätsfunktionen Rooming und Handover ermöglicht.

Diese Aufgabe löst die Erfindung durch ein Kommunikationssystem mit den Merkmalen des Anspruches 1. Günstige Ausgestaltungen der Erfindung sind Gegenstand von Unteransprüchen.

Ein erfindungsgemäßes Kommunikationssystem besteht aus einer Vermittlungssteuerung, Basisstationen, tragbaren Handapparaten als Kommunikationsendgeräte, einem Verbindungssteuerungssystem mit mindestens zwei Verbindungssteuereinheiten und einer Mobilitätsmanagementeinrichtung. Die Vermittlungssteuerung hat eine Vielzahl von Teilnehmeranschlußmodulen, an die jeweils mindestens ein Kommunikationsendgerät anschließbar ist und die durch Signalisierungs- und Nutzkanalverbindungen untereinander zu Anschlußmodulgruppen zusammenfaßbar sind, zum Auf- und Abbauen aller Rufe zwischen Kommunikationsendgeräten, sofern mindestens eines der rufbeteiligten Endgeräte an die Vermittlungssteuerung angeschlossen ist einschließlich des Steuerns der jeweils erforderlichen Verbindungen. Die tragbaren Handapparate oder Schnurlosendgeräte haben jeweils eine zugeordnete Identifikation und dienen zum drahtlosen Informationsaustausch mit jeweils einer Basisstation, die vom Handapparat jeweils aus einer Vielzahl von Basisstationen als für einen Verbindungsaufbau geeignet ausgewählt ist. Die mindestens zwei Verbindungssteuereinheiten des Verbindungssteuerungssystems sind über ein Teilnehmeranschlußmodul an die Vermittlungssteuerung angeschlossen. Jeder Verbindungssteuereinheit sind mehrere Basisstationen zur Informationsübertragung zwischen der Verbindungssteuereinheit und den Handapparaten zugeordnet. Außerdem sind mindestens einer der Verbindungssteuereinheiten eine Vielzahl von Schnurlosendgeräten abhängig von deren Identifikation zugeordnet. Die Verbindungssteuereinheiten setzen jeweils die Identifikation der Handapparate in Rufnummern für die Vermittlungssteuerung um bzw. Rufnummern in Identifikationen der Handapparate um. Jede Verbindungssteuereinheit führt jeweils die Wegelenkung der Nutzinformation zwischen der Verbindungssteuereinheit und einem Handapparat, zu dem eine Verbindung aufgebaut werden soll, durch. Die Mobilitätsmanagementeinrichtung dient der Realisierung der den Verbindungssteuereinheiten übergeordneten Mobilitätsfunktionen. Außerdem dient die Mobilitätsmanagementeinrichtung dem Anpassen der Signalisierung zwischen der Vermittlungssteuerung und den Verbindungssteuereinheiten. Darüber hinaus dient die Mobilitätsmanagementeinrichtung der Wegelenkung der Nutzinformation zwischen der Vermittlungssteuerung und der Verbindungssteuereinheit, der die zum Verbindungsaufbau mit einem rufbeteiligten Handapparat als geeignet ausgewählte Basisstation zugeordnet ist.

Die beschriebene Mobilitätsmanagementeinrichtung ermöglicht es, eine Vielzahl von Verbindungssteuereinheiten in einem erfindungsgemäßen Kommunikationssystem über ein Teilnehmeranschlußmodul an die Vermittlungssteuerung anzuschließen und trotzdem die übergeordneten Mobilitätsfunktionen zu realisieren. Dadurch kann ein Kommunikationssystem mit einer großen Zahl von Basisstationen realisiert werden, zwischen denen die Mobilitätsfunktionen automatisch sichergestellt sind. In einer besonders günstigen Ausgestaltungsform eines erfindungsgemäßen Kommunikationssystems besteht die Mobilitätsmanagementeinrichtung aus mehreren Mobilitätsmanagementein-Subeinrichtungen zur Realisierung der übergeordneten Mobilitätsfunktionen, zur Wegelenkung sowie zum Anpassen der Signalisierung zwischen der Vermittlungssteuerung und bestimmten, der jeweiligen Mobilitätsmanagement-Subeinrichtung zugeordneten Verbindungssteuereinheiten, wobei mindestens eine Signalisierungsinformationsübertragung zwischen den Mobilitätsmanagement-Subeinrichtungen unter Umgehung der Vermittlungssteuerung vorgesehen ist, um einen Verbindungsauf- und Verbindungsabbau zwischen der Vermittlungssteuerung und jedem Handapparat, der einer beliebigen Verbindungssteuereinheit des Kommunikationssystems zugeordnet ist, abhängig von dessen lokalem Aufenthalt über jede der Verbindungssteuereinheiten des Systems zu ermöglichen.

Wenn beispielsweise jedem Teilnehmeranschlußmodul, über das Schnurlosendgeräte erreichbar sind, mit einer Mobilitätsmanagement-Subeinrichtung ausgestattet ist und die Signalisierungsinformationsübertragung zwischen den einzelnen Mobilitätsmanagement-Subeinrichtungen möglich ist, kann ein erfindungsgemäßes Kommunikationssystem modular durch jeweiliges Hinzufügen weiterer Teilnehmeranschlußmodule mit Mobilitätsmanagement-Subeinrichtungen erweitert werden. Da jede dieser Mobilitätsmanagement-Subeinrichtungen einen Teil der insgesamt anfallenden Mobilitätsmanagementsteuerungsarbeit übernimmt, braucht eine Mobilitätsmanagementsteuereinrichtung nicht überdimensioniert zu werden, um einen späteren Ausbau eines Kommunikationssystems zu ermöglichen.

Dadurch, daß zwischen den einzelnen Mobilitätsmanagement-Subeinrichtungen unabhängig von der Vermittlungssteuerung eine Signalisierungsinformationsübertragung möglich ist, kann beispielsweise bei einem für ein Schnurlosendgerät kommenden Ruf die Vermittlungssteuerung des Kommunikationssystems diesen Ruf zu der Verbindungssteuereinheit leiten, der das genannte Schnurlosendgerät abhängig von seiner Identifikation zugeordnet ist. Falls das Schnurlosendgerät nicht im Sende-/Empfangsbereich dieser Verbindungssteuereinheit nachgeordneten Basisstationen erreichbar ist, kann die der Verbindungssteuereinheit übergeordnete Mobilitätsmanagement-Subeinrichtung die Signalisierungsinformation unmittelbar, unter Umgehung der Vermittlungssteuerung, zu einer Mobilitätsmanagement-Subeinrichtung weiterleiten, über deren nachgeordnete Verbindungssteuereinheit bzw. die dieser Verbindungssteuereinheit nachgeordneten Basisstationen das Schnurlosendgerät erreichbar ist. Der Nutzkanalverbindungsaufbau kann daraufhin unmittelbar von der Vermittlungssteuerung über die Verbindungssteuereinheit erfolgen, über die das Schnurlosendgerät erreichbar ist.

Eine Weiterbildung der letztgenannten Ausführungsform eines erfindungsgemäßen Kommunikationssystems sieht vor, daß zwischen den Mobilitätsmanagement-Subeinrichtungen auch eine Nutzsignalinformationsübertragung unter Umgehung der Vermittlungssteuerung vorgesehen ist, so daß ein Verbindungsaufbau bzw. Verbindungsabbau zwischen der Vermittlungssteuerung und jedem Handapparat über jede Verbindungssteuereinheit ermöglicht wird.

Bei einem erfindungsgemäßen Kommunikationssystem ist es nicht erforderlich, daß die Verbindungssteuereinheiten und/oder die Mobilitätsmanagement-Subeinrichtungen in unmittelbarer Nähe der Vermittlungssteuerung angeordnet sind. Vielmehr ist es ein Vorteil eines erfindungsgemäßen Kommunikationssystems, daß mindestens ein Teil der Verbindungssteuereinheiten und gegebenenfalls auch ein Teil der diesen zugeordneten Mobilitätsmanagement-Subsysteme in größerem Abstand von der Vermittlungssteuerung angeordnet sein können.

Nachstehend wird die Erfindung anhand eines Ausführungsbeispiels unter Bezugnahme auf die Figur näher erläutert.

Die Figur zeigt in schematischer Darstellung das Blockschaltbild eines erfindungsgemäßen Kommunikationssystems.

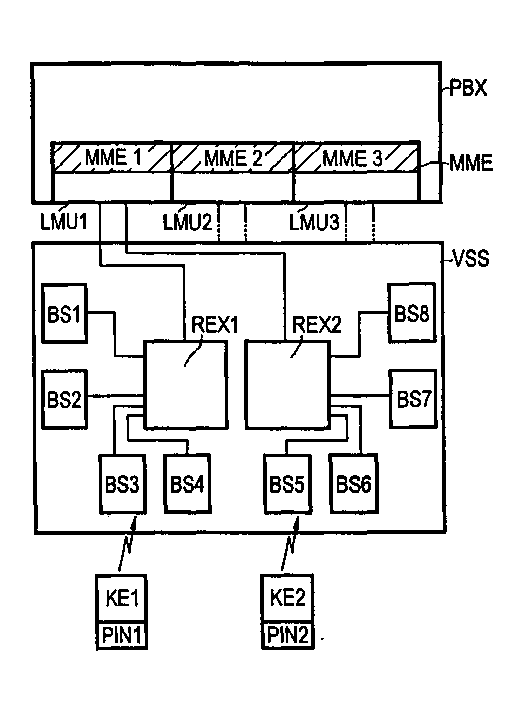

Die Figur zeigt eine Vermittlungssteuerung PBX mit drei Teilnehmeranschlußmodulen LMU1, LMU2, LMU3. Im Beispiel der Figur ist innerhalb der Teilnehmeranschlußmodule LMU1, LMU2 und LMU3 eine Mobilitätsmanagementeinrichtung MME schraffiert dargestellt. Diese Mobilitätsmanagementeinrichtung MME kann selbstverständlich auch außerhalb der Vermittlungssteuerung PBX und außerdem außerhalb der Teilnehmeranschlußmodule LMU1, LMU2, LMU3 angeordnet sein. Im Beispiel gemäß Fig. 1 besteht die Mobilitätsmanagementeinrichtung MME aus drei Mobilitätsmanagement-Subeinrichtungen MM1, MM2 und MM3.

Das in der Figur dargestellte Kommunikationssystem enthält außerdem ein Verbindungssteuerungssystem VSS mit zwei Verbindungssteuereinheiten REX1, REX2, die im dargestellten Beispiel an das erste Teilnehmeranschlußmodul LMU1 angeschlossen sind. Der Verbindungssteuereinheit REX1 sind vier Basisstationen BS1, BS2, BS3 und BS4 zugeordnet. Die Verbindungssteuereinheit REX2 ist ebenfalls mit vier ihr zugeordneten Basisstationen BS5, BS6, BS7 und BS8 verbunden.

In der Figur sind außerdem zwei Schnurloskommunikationsendgeräte KE1, KE2 dargestellt, deren Luftschnittstelle zu Basisstationen BS3, BS5 jeweils durch die Darstellung eines Blitzes kenntlich gemacht ist.

In der gezeigten Vermittlungssteuerung PBX werden alle Rufe, an denen mindestens ein Kommunikationsendgerät des Kommunikationssystems beteiligt sind, vermittelt. Außerdem werden die erforderlichen Verbindungen von der Vermittlungssteuerung gesteuert. Die in Form von tragbaren Handapparaten ausgestalteten Schnurlosendgeräte KE1, KE2 enthalten jeweils eine ihnen zugeordnete Identifikation PIN1, PIN2. Jedes Schnurlosendgerät KE1, KE2 ist einer Verbindungssteuereinheit REX1, REX2 abhängig von seiner Identifikation PIN1, PIN2 eindeutig zugeordnet. Die Verbindungssteuereinheiten REX1, REX2 setzen die Identifikation eines Endgerätes in eine Rufnummer der Vermittlungssteuerung PBX um bzw. setzen sie eine Rufnummer der Vermittlungssteuerung PBX bei kommendem Ruf in eine Identifikation PIN1, PIN2 eines Schnurlosendgerätes KE1, KE2 um. Ein für ein Schnurlosendgerät KE1, KE2 kommender Ruf wird von der Mobilitätsmanagementeinrichtung MME gesteuert über ein Teilnehmeranschlußmodul LMU1 zu einer Verbindungssteuereinheit REX1 geleitet. Hierzu muß die Mobilitätsmanagementeinrichtung MME von den Verbindungssteuereinheiten REX1, REX2 erfahren, über welche Verbindungssteuereinheit REX1, REX2 das Endgerät KE1 erreichbar ist. Die entsprechende Information wird vorzugsweise unter Ausnutzung einer Rooming-Information in einer Datenbasis abgelegt.

Die Mobilitätsmanagementeinrichtung MME kann also aufgrund der genannten Information den Ruf bis zu der Verbindungssteuereinheit REX1 weiterleiten, über die das Endgerät KE1 aktuell erreichbar ist. Die Verbindungssteuereinheit REX1, REX2 setzt die Rufnummer, zu der die Vermittlungssteuerung PBX den Rufaufbau veranlaßt, in die Identifikation PIN1 des Endgerätes KE1 um und lenkt die Nutzinformation über die Basisstation BS3, in deren Funkbereich sich das Endgerät KE1 mit der Identifikation PIN1 momentan befindet zu dem Endgerät KE1.

## Patentansprüche

1. Kommunikationssystem, bestehend aus
- einer Vermittlungssteuerung (PBX) mit einer Vielzahl von Teilnehmeranschlußmodulen (LMU1, LMU2, LMU3), an die jeweils mindestens ein Kommunikationsendgerät (KE1, KE2) anschließbar ist zum Auf- und Abbauen aller Rufe zwischen Kommunikationsendgeräten (KE1, KE2), sofern mindestens eines der rufbeteiligten Kommunikationsendgeräte (KE1, KE2) an die Vermittlungssteuerung (PBX) angeschlossen ist einschließlich des Steuerns der jeweils erforderlichen Verbindungen,
- tragbaren Handapparaten als Kommunikationsendgeräte (KE1, KE2) mit jeweils zugeordneter Identifikation (PIN1, PIN2) zum drahtlosen Informationsaustausch mit jeweils einer Basisstation (BS1, BS2, BS3), die vom jeweiligen Handapparat (KE1, KE2) aus einer Vielzahl von Basisstationen (BS1, BS2, BS3) als für einen Verbindungsaufbau geeignet ausgewählt ist,
- einem Verbindungssteuerungssystem (VSS), bestehend aus mindestens zwei Verbindungssteuereinheiten (REX1, REX2),
- die über ein Teilnehmeranschlußmodul an die Vermittlungssteuerung angeschlossen sind,
- denen jeweils mehrere der genannten Basisstationen zur Informationsübertragung zwischen der entsprechenden Verbindungssteuereinheit (REX1, REX2) und den Handapparaten zugeordnet sind,
- denen jeweils eine Vielzahl der genannten Handapparate (KE1, KE2) abhängig von deren Identifikation (PIN) zugeordnet sind,
- die die Identifikation (PIN1, PIN2) der Handapparate (KE1, KE2) jeweils in Rufnummern für die Vermittlungssteuerung (PBX) umsetzen bzw. Rufnummern in Identifikationen (PIN1, PIN2) der Handapparate umsetzen und - die jeweils die Wegelenkung der Nutzinformation zwischen den Verbindungssteuereinheiten (REX1, REX2) und dem jeweiligen Handapparat (KE1, KE2) durchführt, sowie
- eine Mobilitätsmanagementeinrichtung (MME)
- zur Realisierung der den Verbindungssteuereinheiten (REX1, REX2) übergeordneten Mobilitätsfunktionen,
- zum Anpassen der Signalisierung zwischen der Vermittlungssteuerung (PBX) und den Verbindungssteuereinheiten (REX1, REX2) und
- zur Wegelenkung der Nutzinformation zwischen der Vermittlungssteuerung (PBX) und jeweils der Verbindungssteuereinheit (REX1, REX2), der die jeweils zum Verbindungsaufbau mit einem rufbeteiligten Handapparat (KE1, KE2) als geeignet ausgewählte Basisstation (BS1, BS2, BS3) zugeordnet ist.

2. Kommunikationssystem nach Anspruch 1,
**dadurch gekennzeichnet,**
daß die Mobilitätsmanagementeinrichtung (MME) aus mehreren Mobilitätsmanagement-Subeinrichtungen (MME1, MME2) besteht, zur Realisierung der übergeordneten Mobilitätsfunktionen, zur Wegelenkung sowie zum Anpassen der Signalisierung zwischen der Vermittlungssteuerung (PBX) und bestimmten, der jeweiligen Mobilitätsmanagement-Subeinrichtung (MME1, MME2) zugeordneten Verbindungssteuereinheiten (REX1, REX2), wobei mindestens eine Signalisierungsinformationsübertragung zwischen den Mobilitätsmanagement-Subeinrichtungen (MME1, MME2) unter Umgehung der Vermittlungssteuerung (PBX) vorgesehen ist, um einen Verbindungsauf- und Verbindungsabbau zwischen der Vermittlungssteuerung (PBX) und jedem Handapparat (KE1, KE2), der irgendeiner Verbindungssteuereinheit (REX1, REX2) des Kommunikationssystemes zugeordnet ist, abhängig von dessen lokalem Aufenthalt über jede Verbindungssteuereinheit (REX1, REX2) des Systems zu ermöglichen.

3. Kommunikationssystem nach Anspruch 2,
**dadurch gekennzeichnet,**
daß eine Nutzsignalinformationsübertragung zwischen den Mobilitätsmanagement-Subeinrichtungen (MME1, MME2) unter Umgehung der Vermittlungssteuerung (PBX) vorgesehen ist, um einen Verbindungsauf- und Verbindungsabbau zwischen der Vermittlungssteuerung (PBX) und jedem Handapparat (KE1, KE2), der irgendeiner Verbindungssteuereinheit (REX1, REX2) des Kommunikationssystemes zugeordnet ist, abhängig von dessen lokalem Aufenthalt über jede Verbindungssteuereinheit (REX1, REX2) sowie jede Mobilitätsmanagement-Subeinrichtung (MME1, MME2) des Systems zu ermöglichen.

4. Kommunikationssystem nach einem der vorhergehenden Ansprüche,
**dadurch gekennzeichnet,**
daß mindestens ein Teil der Verbindungssteuereinheiten (REX1, REX2) lokal von der Vermittlungssteuerung (PBX) beabstandet angeordnet ist.

5. Kommunikationssystem nach Anspruch 2 oder 3,
**dadurch gekennzeichnet,**
daß mindestens ein Teil der Mobilitätsmanagement-Subeinrichtungen (MME1, MME2) sowie die diesen zugeordneten Verbindungssteuereinheiten (REX1, REX2) lokal von der Vermittlungssteuerung (PBX2) beabstandet angeordnet ist.
